# FASCICULE DE BREVET EUROPEEN

(11) **EP 2 440 481 B1**
(45) Date de publication et mention de la délivrance du brevet: **03.04.2013**
(21) Numéro de dépôt: 10737986.9
(22) Date de dépôt: 10.06.2010
(51) Int. Cl.: B65G 21/16, B65G 21/20

(54) **INSTALLATION DE CONVOYAGE COMPRENANT AU MOINS UN COULOIR COURBE**
FÖRDERANLAGE MIT MINDESTENS EINEM GEKRÜMMTEN GANG
CONVEYING EQUIPMENT INCLUDING AT LEAST ONE CURVED CORRIDOR

(30) Priorité: 11.06.2009 FR 0953871
(43) Date de publication de la demande: 18.04.2012
(73) Titulaire: Sidel Participations, 76930 Octeville sur Mer (FR)
(72) Inventeur: PERREARD, Brice, F-76930 Octeville-sur-Mer (FR); PERRIN, David, F-76930 Octeville-sur-Mer (FR); PETROVIC, Zmaj, F-76930 Octeville-sur-mer (FR)
(74) Mandataire: Cabinet Plasseraud
(86) Numéro de dépôt international: PCT/FR2010/051159
(87) Numéro de publication internationale: WO 2010/142918

(56) Documents cités:
- US-A- 5 211 280

## Description

L'invention se rapporte à une installation de convoyage, du type comprenant au moins un couloir courbe de largeur réglable.

On connaît du document FR 2 806 395 une installation de convoyage comprenant au moins un couloir courbe dans lequel circule une file de produits, ledit couloir étant délimité, d'une part, par une première paroi latérale solidaire du bâti de l'installation et qui présente un premier rayon de courbure fixe et, d'autre part, par une seconde paroi latérale mobile radialement et guidée sur ledit bâti.

Le document FR 2 806 395 mentionne que la seconde paroi mobile est constituée d'un profil de guidage continu qui s'étend de l'entrée jusqu'à la sortie dudit couloir courbe, en vis-à-vis de ladite première paroi fixe, ledit profil de guidage présentant un second rayon de courbure qui est de dimension variable selon le diamètre desdits produits pour permettre l'écartement ou le rapprochement de ladite seconde paroi latérale par rapport à ladite première paroi latérale.

Une telle installation est notamment conçue pour guider des bouteilles tenues par leur col.

L'invention vise à proposer une solution alternative à celle décrite dans le document FR 2 806 395, qui serait mieux adaptée au convoyage de bouteilles reposant par leur fond sur un tapis sans fin, entre deux parois latérales.

On connait de telles installations. Notamment, les documents US 5 211 280, DE 43 30 702, DE 20 2005 001689U et DE 87 14 605 décrivent des installations comprenant au moins un couloir dans lequel des produits sont convoyés en reposant sur leur fond, le couloir étant délimité par deux parois dont l'une au moins présente un rayon de courbure variable, pour augmenter ou diminuer la largeur du couloir.

Ces documents prévoient tous des supports ponctuels pour profil de guidage, les supports étant reliés chacun à des moyens assurant leur déplacement pour les écarter les uns des autres (agrandissement du rayon de courbure) ou les rapprocher les uns des autres (rétrécissement du rayon de courbure).

Une telle réalisation nécessite de changer le profil de guidage ou de retirer le profil de guidage pour changer le rayon de courbure. Autrement dit, concrètement, quand on souhaite changer le rayon de courbure, il est nécessaire de retirer le profil de guidage, d'ajuster les supports ponctuels à une position voulue, et de replacer des profils de guidage plus longs ou plus courts, suivant que l'on augmente ou que l'on réduit le rayon de courbure. Ainsi, pour augmenter la largeur d'un couloir, il est nécessaire d'immobiliser l'installation de manière à y réaliser le remplacement du profil.

Il peut être prévu par ailleurs des profils de guidage réalisés dans des matériaux élastiques. Toutefois, quand les supports sont déplacés pour augmenter ou réduire le rayon de courbure, les profils sont étirés ou déformés. Ceci pose soit un problème de fragilisation des profils, soit un problème de guidage des produits prenant appui sur les profils.

La solution de l'invention permet non seulement de ne pas avoir à arrêter l'installation en fonctionnement lorsque l'on change la largeur du couloir, mais également de pallier les inconvénients précités. L'invention vise également à proposer une solution technique plus robuste pour les produits véhiculés qui, subissant la force centrifuge, exercent une pression plus importante sur la paroi se trouvant à l'extérieur du virage formé par le couloir courbe.

A cet effet, l'invention concerne une installation de convoyage comprenant au moins un couloir courbe dans lequel circule une file de produits déplacés par un tapis mobile sans fin, le couloir étant délimité :
- par une première paroi fixe solidaire du bâti et qui présente un premier rayon de courbure fixe, et
- par une seconde paroi mobile par rapport au bâti, et qui présente un second rayon de courbure variable selon les produits, la seconde paroi mobile étant constituée :
- d'un profil de guidage, pouvant comporter plusieurs éléments, faisant office de surface de frottement, qui s'étend de l'entrée jusqu'à la sortie dudit couloir courbe, en vis-à-vis de ladite première paroi fixe,
- d'une structure qui porte le profil de guidage, laquelle structure est constituée de plusieurs tronçons solidaires de moyens de déplacement, lesquels tronçons sont répartis entre l'entrée et la sortie du couloir courbe et ils sont aboutés et logés en glissant dans le profil de guidage, lequel profil forme une charnière entre les tronçons de la structure.

L'installation conforme à l'invention ainsi réalisée comprend une ou plusieurs couloirs dont les parois sont de type composite, c'est-à-dire qu'elles sont constituées, comme décrit dans le document FR 2 918 973, d'un élément structurel rigide et d'un profilé souple qui habille ledit élément structurel. La paroi courbe à rayon de courbure variable présente une double épaisseur : l'une des épaisseurs étant réalisée par l'épaisseur du profil de guidage et l'autre épaisseur étant réalisée par les tronçons aboutés qui s'étendent sur toute la longueur du profil. Ladite Cette paroi à rayon de courbure variable est donc plus résistante que celles des installations décrites dans l'état de la technique (indéformable, quasiment).

Les tronçons glissent dans le profil de guidage entre une position où ils sont aboutés, et une position où ils sont écartés les uns des autres, mais où ils forment chacun des arcs de cercle, chacun supportant une partie du profil sur une certaine longueur. Il n'est ainsi pas nécessaire de prévoir des supports supplémentaires pour le profil quand le rayon de courbure est considérablement augmenté, car le profil est supporté non pas ponctuellement, comme il est prévu dans l'état de la technique, mais suivant plusieurs portions de courbes adjacentes constituées par les tronçons.

Ainsi réalisés, et hormis le tronçon solidaire du profil de guidage, les tronçons glissent dans ledit profil de guidage sous l'action des moyens de déplacement, ce qui permet une augmentation ou une diminution du rayon de la seconde paroi.

On peut ainsi faire varier l'écartement entre les deux parois en actionnant les moyens de déplacement précités.

L'invention peut également comporter les caractéristiques suivantes, prises séparément ou en combinaison :
- les tronçons longs sont fixés sur les moyens de déplacement au niveau de l'une de leurs extrémités ;
- le profil de guidage est constitué d'un seul élément continu entre l'entrée et la sortie du couloir courbe, solidaire du tronçon central de la structure ;
- le profil de guidage est constitué de plusieurs éléments fixés sur les tronçons de la structure ;
- chacun des tronçons de la structure est logé dans l'élément du profil de guidage, de sorte que les éléments du profil de guidage forment des charnières entre les deux tronçons de la structure ;
- le second rayon de courbure est inférieur au premier rayon de courbure ;
- la paroi mobile s'inscrit suivant un arc de cercle dont le rayon varie entre un rayon maximum et un rayon minimum, et les tronçons sont constitués de plaques cintrées qui s'inscrivent suivant un arc de cercle présentant un rayon moyen, le rayon moyen étant compris entre le rayon maximum et le rayon minimum ;
- les moyens de déplacement des tronçons sont aptes à réaliser leur déplacement suivant une direction radiale transversale ;
- les moyens de déplacement des tronçons de la seconde paroi mobile sont constitués de supports rayonnants en forme de barreaux à section en U, disposés radialement, chaque support rayonnant comprenant au moins une patte sur laquelle est fixée un tronçon, lequel support rayonnant à section en U est guidé par rapport au bâti par un système de glissières et il est actionné par un mécanisme de manoeuvre ;
- le mécanisme de manoeuvre du support rayonnant à section en U comporte :
   - un premier mécanisme de déplacement dudit support rayonnant à section en U comprenant :
      - un écrou du type flottant solidaire dudit support rayonnant à section en U, et
      - une vis sans fin disposée radialement, guidée dans un palier solidaire du bâti, et
      - des moyens d'entraînement en rotation de la vis radiale ;
- les moyens d'entraînement en rotation de la vis radiale comprennent une roue dentée entraînée par un arbre souple fileté qui s'étend dans une gaine sur le côté du couloir externe fixe, de roue en roue, au fil des supports rayonnants à section en U à actionner ;
- l'installation comporte une sole réalisée en matériau thermoplastique aménagée avec au moins une rainure courbe pour guider le tapis de convoyage correspondant, laquelle sole présente des ouvertures pour le passage des pattes de fixation des parois fixes et mobiles, respectivement ;
- le profil de guidage de la paroi mobile présente des extrémités biseautées, en correspondance avec les profils de guidage adjacents, assurant une continuité pour le guidage des produits, quelles que soient leurs dimensions ;
- la structure porteuse du profil de guidage comprend des tronçons dont le nombre est en rapport avec la longueur du couloir correspondant ;
- la structure porteuse du profil de guidage comporte un tronçon central court disposé au voisinage du centre du couloir courbe ainsi que, sur la partie du convoyeur présentant le plus petit rayon de courbure, deux tronçons répartis de part et d'autre du tronçon central court, les tronçons étant logés dans le profil de guidage ;
- la structure porteuse du profil de guidage comporte un tronçon central court disposé au voisinage du centre du couloir courbe ainsi que, sur la partie du convoyeur présentant le plus grand rayon de courbure, quatre tronçons qui sont répartis de part et d'autre du tronçon central court et ils sont logés dans le profil de guidage.

L'invention sera davantage comprise à la lumière de la description de plusieurs modes de réalisation qui vont maintenant être présentés, en faisant référence aux figures annexées parmi lesquelles :
- la figure 1 montre une installation conforme à l'invention, vue en perspective ;

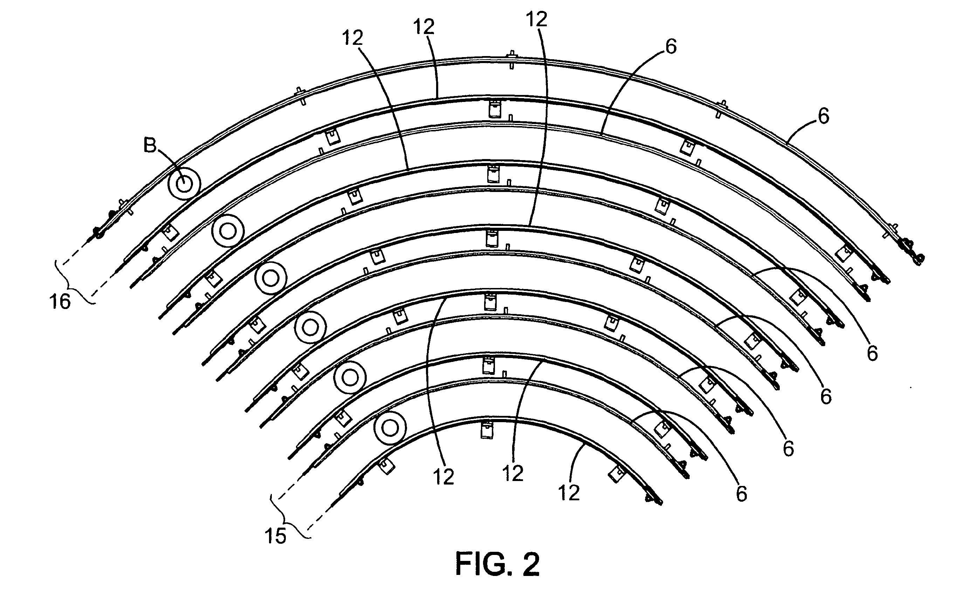

- la figure 2 illustre les différents couloirs de l'installation de la figure 1, en vue de dessus ;
- la figure 3 montre les parois du couloir le plus long de l'installation illustrées en figures 1 et 2, en vue de dessus, la paroi interne étant démunie de son profil de guidage ;
- la figure 3A montre le profil de guidage correspondant à la paroi interne, constitué d'un seul élément continu ;
- la figure 3B montre le profil de guidage de la paroi interne, constitué de plusieurs éléments ;
- la figure 3C est une section de la paroi représentée figure 3 ;
- la figure 3D illustre schématiquement les différentes positions des tronçons pour le rayon minimum et le rayon maximum de l'arc de cercle dans lequel s'inscrit une paroi mobile d'une installation conforme à l'invention ;
- la figure 4A montre une paroi mobile d'un couloir, en vue de profil, dont le profil de guidage comporte un seul élément ;
- la figure 4B montre une paroi mobile d'un couloir, en vue de profil, dont le profil de guidage comporte plusieurs éléments ;
- la figure 5 est une vue de dessus de l'installation montrée en figure 1, dont on a retiré la sole de sorte à faire apparaître le bâti ;
- la figure 6 illustre schématiquement une installation conforme à l'invention en coupe radiale,
- la figure 7A illustre partiellement l'installation dépourvue de paroi et de sole, en vue de profil,
- la figure 7B est une vue en coupe de la figure 7A, suivant l'axe VII-VII,
- et la figure 8 montre l'installation de la figure 1 en vue de profil, suivant un angle de vue différent de celui de la figure 1.

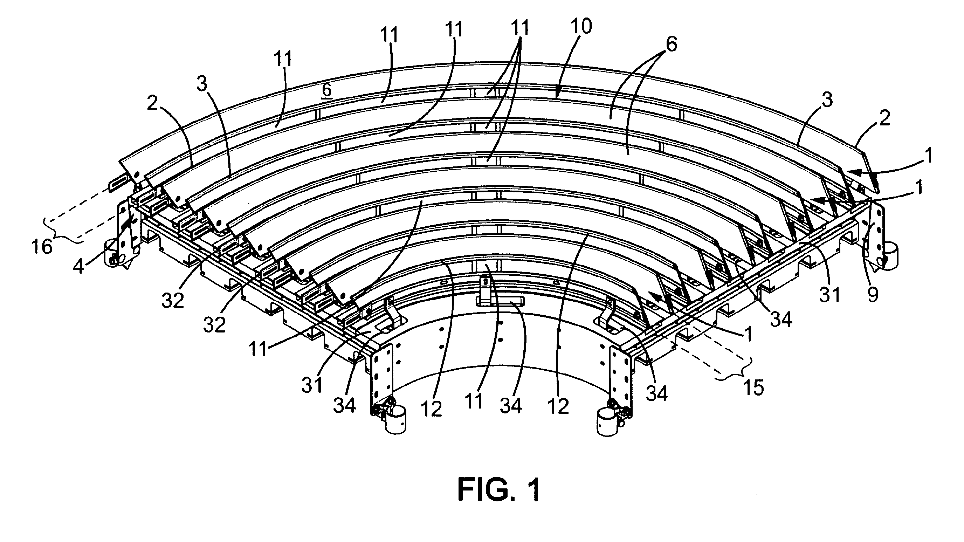

La figure 1 montre une installation conforme à l'invention, qui est conçue pour le convoyage de bouteilles d'un poste de traitement à un autre, et qui comporte plusieurs couloirs 1 qui sont courbes, par exemple pour des raisons d'encombrement des installations dans les bâtiments qui les accueillent.

Dans l'installation conforme à l'invention, les bouteilles sont convoyées en étant alignées dans les couloirs 1, chaque couloir 1 comportant deux parois 2 et 3 latérales en vis-à-vis.

Conformément à l'invention, la paroi 2 est fixe et la paroi 3 est mobile, la paroi 2 fixe présentant un rayon de courbure fixe et la paroi 3 mobile présentant un rayon de courbure variable.

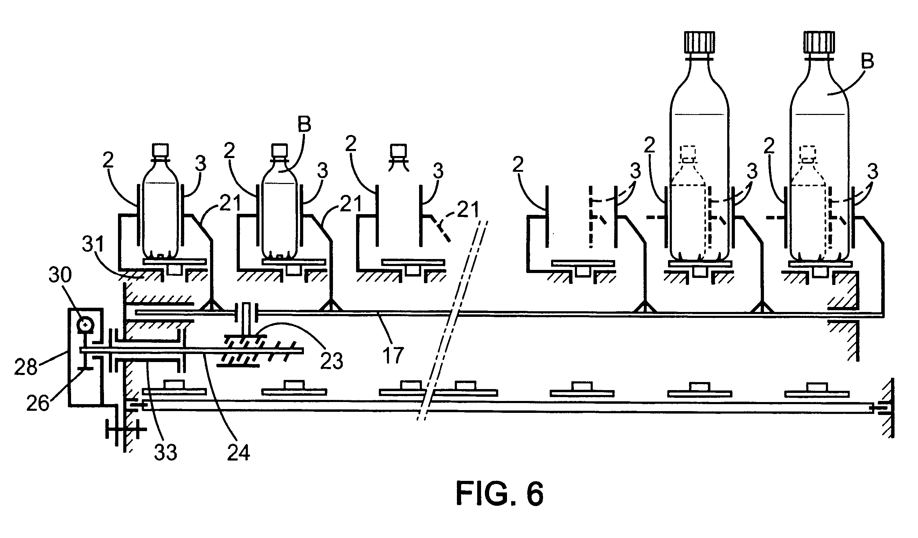

Ainsi, l'écartement entre les parois 2 et 3 des couloirs 1 peut être adapté aux différents diamètres de bouteilles B qui doivent être convoyées (voir figure 6).

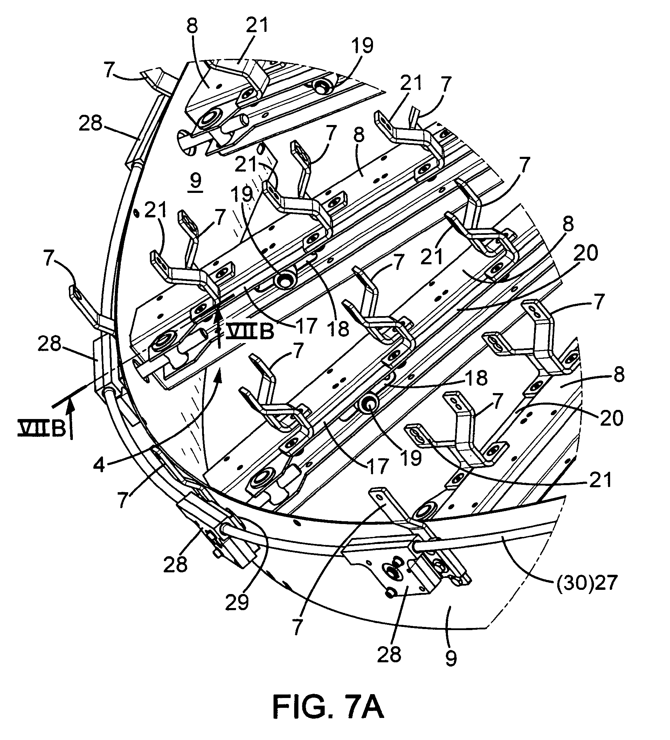

La paroi 2 fixe est réalisée solidaire d'un bâti 4 de l'installation, illustré plus en détails sur la figure 7A.

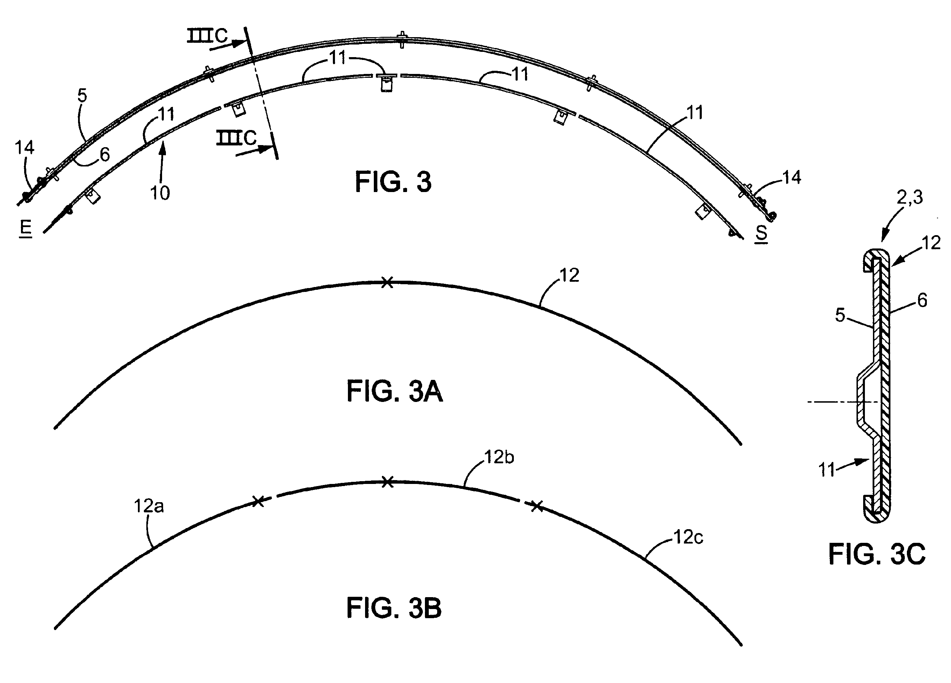

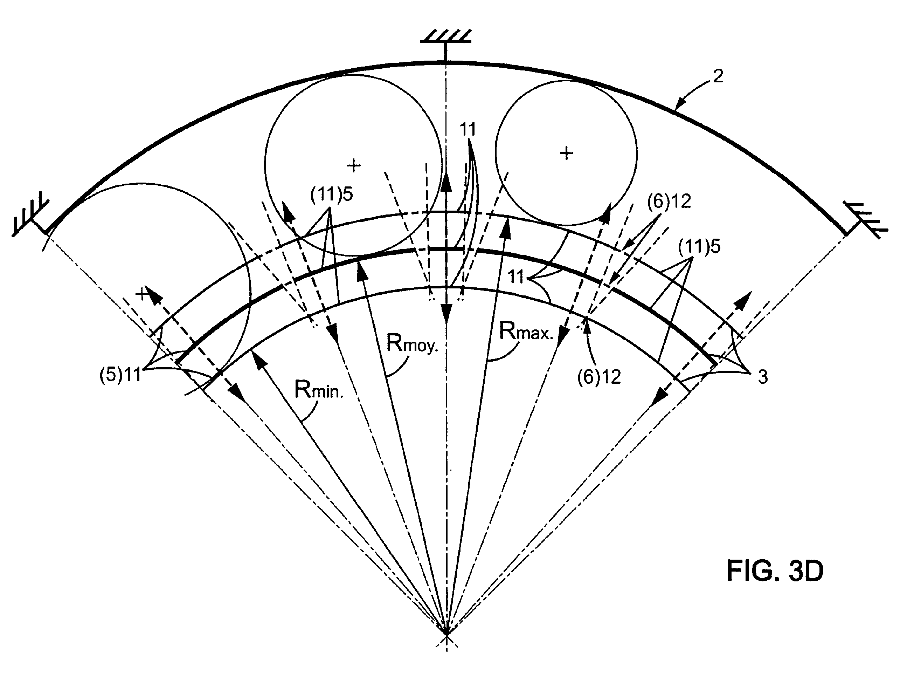

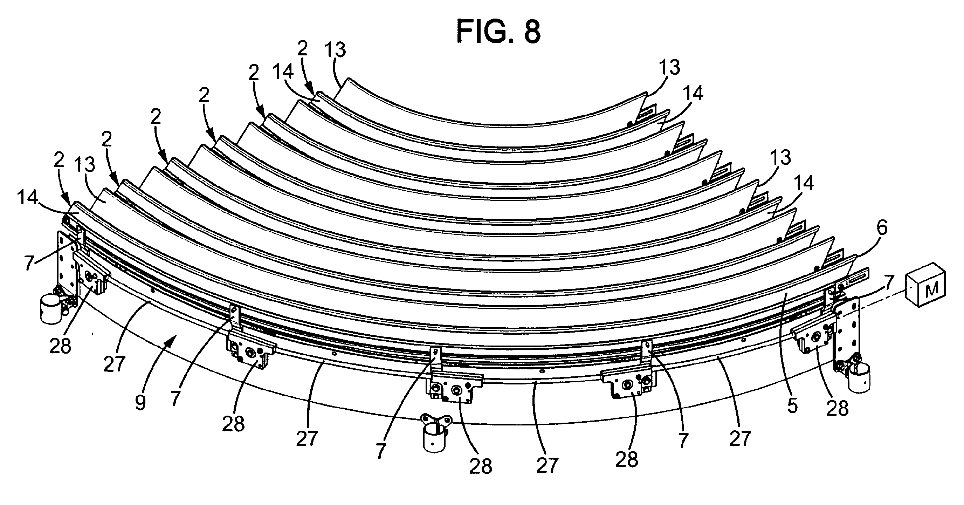

Chaque paroi 2 comporte une âme 5 métallique insérée et fixée dans un profil 6 de guidage (figures 3 et 8), chaque profil 6 s'étendant de l'entrée E jusqu'à la sortie S du couloir 1 courbe qu'il délimite.

De plus, l'âme 5 de chaque paroi 2 est fixée sur le bâti 4 au moyen de supports pattes 7.

Comme le montre la figure 7A, chaque patte 7 présente une forme sensiblement coudée pour, d'une part, être fixée par l'une de ses extrémités au bâti 4 et, d'autre part, être fixée par son autre extrémité sur la paroi de l'âme 5 métallique disposée sensiblement verticalement.

Les pattes 7 peuvent présenter des formes qui varient sensiblement suivant l'endroit où elles sont fixées sur le bâti 4.

Certaines de ces pattes 7 sont fixées sur une paroi 9 externe courbe du bâti 4, qui délimite l'extérieur de la portion de l'installation.

D'autres pattes 7, de forme sensiblement différente de celles qui sont fixées sur la paroi 9 courbe, sont fixées à intervalles réguliers sur des traverses 8 du bâti.

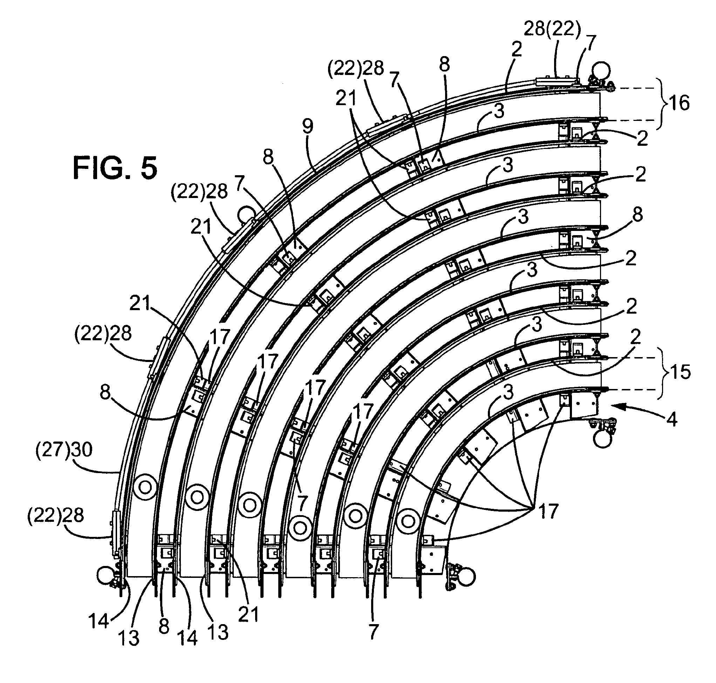

Les traverses 8 forment des rayons du bâti 4 et sont réparties également à intervalles réguliers sur la portion courbe de l'installation (voir en particulier la figure 5).

Dans le cadre du mode de réalisation qui est présentement décrit, c'est la paroi 3 interne qui est réalisée mobile.

Il devra toutefois être entendu que l'invention n'est pas limitée à ce mode de réalisation et que la paroi mobile pourrait être la paroi externe des couloirs 1, sans sortir du cadre de l'invention.

Dans ce mode de réalisation, la paroi 3 mobile a été choisie interne, car les bouteilles B qui circulent dans les couloirs 1 prennent appui sur la paroi externe des couloirs 1 de par la force centrifuge qu'elles subissent, générée par leur déplacement suivant cette portion courbe d'installation.

La paroi 3 mobile est ainsi la paroi interne des couloirs 1 ; son rayon de courbure est inférieur à celui de la paroi 2 fixe à laquelle elle est associée pour former un couloir.

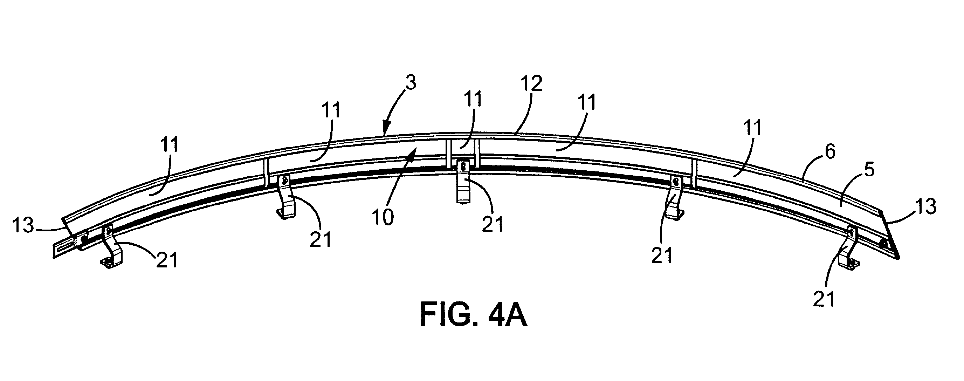

La paroi 3 mobile comporte une structure 10 constituée de plusieurs tronçons 11 métalliques (figures 3 et 4A) qui portent un profil 12 de guidage, ledit profil 12 s'étendant de l'entrée E jusqu'à la sortie S du couloir qu'il délimite.

Suivant la longueur du couloir entre son entrée E et sa sortie S, la structure 10 peut, par exemple, comporter de trois à cinq tronçons 11, comme on peut le voir en particulier sur la figure 1.

La paroi 3 mobile, tout comme la paroi 2 fixe, est constituée, comme représenté figure 3C, d'une âme 5 métallique qui est rigide et d'un profil 6 de guidage qui est réalisé en matériau thermoplastique relativement souple.

Comme on le comprend de la figure 3D, la paroi 3 mobile s'inscrit dans un arc de cercle dont le rayon varie.

Quand la paroi 3 mobile est dans une position où elle est la plus écartée possible de la paroi 2 fixe pour guider des bouteilles Bg de grand diamètre, l'arc de cercle dans lequel elle s'inscrit présente un rayon minimum Rmin.

Quand la paroi 3 mobile est dans une position où elle est la plus proche possible de la paroi 2 fixe pour guider des bouteilles Bp de petit diamètre, l'arc de cercle dans lequel elle s'inscrit présente un rayon maximum Rmax.

Les tronçons 11 métalliques sont rigides et ils sont montés mobiles glissants dans le profil 12 de guidage.

Comme on peut le voir sur la figure 3D, les tronçons 11 (qui sont montrés retirés du profil 12 de la paroi 3 mobile) s'inscrivent dans un arc de cercle ayant un rayon Rmoy pour guider des bouteilles Bm de diamètre moyen. Le rayon de courbure des tronçons 11 métalliques est moyen par rapport auxdits rayons minimum Rmin et maximum Rmax.

Les tronçons 11 sont suffisamment rigides pour déformer le profil 12 et imposer auxdits profils 12 le rayon de l'arc de cercle dans lequel ils s'inscrivent, suivant la position de la paroi 3 qui est mobile par rapport à la paroi 2 qui est fixe.

En cas de changement de rayon de courbure, le profil 12 fait office de charnière entre les extrémités de deux tronçons 11 adjacents.

Conformément au mode de réalisation illustré en figure 1, sur la partie 15 du convoyeur présentant le plus petit rayon de courbure, on prévoit deux tronçons 11 disposés de part et d'autre du tronçon 11 central qui est réalisé plus court, le profil 12 de guidage étant constitué, par exemple, d'un seul élément qui est fixé sur ce tronçon 11 central, comme montré en figure 3A.

Sur la partie 16 du convoyeur présentant le plus grand rayon de courbure (figure 1), on prévoit plusieurs tronçons 11, quatre tronçons par exemple, qui sont répartis de part et d'autre du tronçon 11 court central.

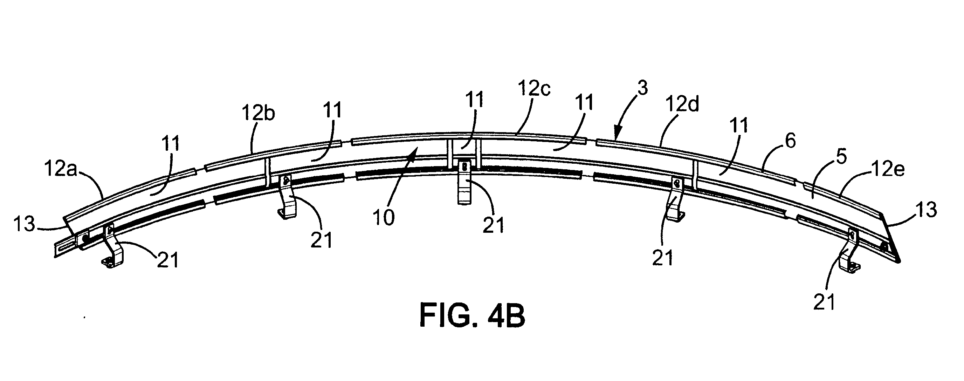

Dans ce cas, comme le montre la figure 3B, le profil 12 de guidage peut être constitué de plusieurs éléments. Un autre mode de réalisation, vu en perspective, est également illustré en figure 4B.

Le profil 12 de guidage peut ainsi comporter plusieurs éléments aboutés, portant les références 12a, 12b, 12c sur la figure 3B, et 12a, 12b, 12c, 12d et 12e sur la figure 4B.

Sur la figure 3B, l'élément 12b central est fixé sur le tronçon 11 et les autres éléments 12a et 12c sont fixés sur les tronçons 11 adjacents. De préférence, comme le montre la figure 3, la fixation des tronçons 11 est réalisée au voisinage de l'une de leurs extrémités.

Il devra être entendu que la structure 10 pourrait comporter un nombre de tronçons 11 différent et que les tronçons 11 pourraient être réalisés dans un autre matériau que le métal, sans sortir du cadre de l'invention.

Le tronçon 11 central de la structure 10, c'est-à-dire le tronçon 11 qui se trouve sensiblement à mi-distance entre l'entrée E et la sortie S du couloir 1, sert d'organe d'ancrage du profil 12.

Les extrémités 13 des profils 12 (figure 4A), et les extrémités 14 des profils 6 (figure 3), sont biseautées suivant une direction parallèle à celle des extrémités biseautées de profils adjacents (voir figure 4A). De cette manière, quand les extrémités 13 et 14 des profils 12 et 6, respectivement, sont reliées aux extrémités des profils adjacents, par exemple des profils droits, leurs extrémités assurent une continuité pour le guidage des bouteilles, quelles que soient les dimensions des bouteilles car, grâce à cette configuration, la paroi de la bouteille est toujours en contact avec au moins l'une des extrémités reliées des profils.

Le profil 12 est réalisé dans un matériau thermoplastique relativement résistant pour supporter les frottements des bouteilles convoyées, mais présentant toutefois une certaine souplesse pour s'adapter à plusieurs rayons de courbure quand les moyens de déplacement des tronçons 11 sont actionnés. Le profil 12 prend la courbure imposée par les tronçons 11.

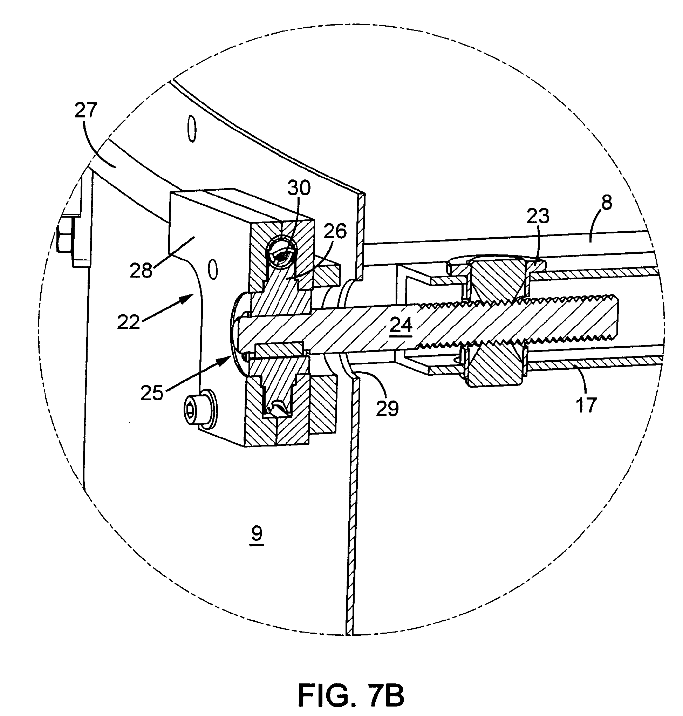

Chaque tronçon 11 est solidaire de moyens de déplacement qui vont maintenant être présentés en faisant référence plus particulièrement aux figures 7A et 7B.

Les moyens de déplacement des tronçons 11 comportent un système à glissières, chaque glissière est en forme de barreau à section en U constituant un support 17 pour les tronçons 11, lequel support est disposé radialement dans l'installation. Pour faciliter la compréhension dans la suite de l'exposé, les supports 17 seront qualifiés de « supports rayonnants » pour les distinguer des autres supports appelés pattes.

Les supports 17 rayonnants à section en U sont montés libres en translation par rapport aux traverses 8 du bâti.

Pour ce faire, les supports 17 rayonnants à section en U comprennent chacun au moins une ouverture 18 traversante longitudinale en forme de lumière, présentant une longueur donnée, cette longueur donnée définissant la course maximale du support 17 rayonnant à section en U par rapport à la traverse 8.

Un galet 19, fixé sur la traverse 8, est monté libre sur un axe qui sert de guide pour le support 17 rayonnant lors de son déplacement entre les deux extrémités de l'ouverture 18.

Les supports 17 rayonnants présentent une forme à section en U, dont le fond présente lesdites ouvertures 18 en forme de lumière et ce fond est apposé contre une surface de la traverse 8.

Les tronçons 11 de la structure 10 sont fixés sur une branche 20 du support 17 rayonnant en forme de U au moyen de pattes 21 de fixation (voir figures 4A, 5 et 7A), la branche 20 formant une traverse radiale.

Le mouvement de translation du support 17 rayonnant à section en U est commandé par un mécanisme 22 de manoeuvre qui va maintenant être décrit en faisant plus particulièrement référence à la figure 7B.

Le mécanisme 22 de manoeuvre comporte un premier mécanisme de déplacement du support 17 rayonnant comprenant un écrou 23 du type flottant, solidaire du support 17 rayonnant à section en U, et une vis 24 sans fin, illustrée schématiquement sur la figure 7B.

La vis 24 sans fin est disposée radialement et peut être guidée dans un palier 33 solidaire du bâti 4 (figure 6).

La vis 24 sans fin est liée à des moyens 25 qui assurent son entraînement en rotation.

Les moyens 25 comportent, d'une part, une roue 26 dentée qui est solidaire de la vis 24 sans fin, la roue 26 dentée étant associée à un arbre 30 souple fileté (représenté schématiquement en figure 6). Cet arbre 30 s'étend sur le côté du couloir externe fixe, c'est-à-dire sur le côté de la paroi 9 courbe qui délimite l'extérieur de l'installation courbe, et il s'étend de roue en roue 26 au fil des supports 17 rayonnants (ou glissières), comme le montre en particulier la figure 8.

De préférence, afin de ne pas endommager l'arbre 30 souple, on prévoit de le faire passer dans une gaine 27.

De même, afin de ne pas endommager la roue 26 dentée, on prévoit de l'enfermer dans un boîtier 28.

Le boîtier 28 est fixé sur la paroi 9 courbe externe de l'installation et il est conçu pour pouvoir être ouvert et refermé aisément, pour faciliter la maintenance des pièces qu'il enferme.

La paroi 9 courbe externe présente des trous 29 traversants, livrant passage à la vis 24 sans fin solidaire de la roue 26.

La rotation de l'arbre 30 fileté est commandée à l'extrémité de l'arbre souple par un moteur M électrique (représenté en figure 8), suivant un sens de rotation ou l'autre, de sorte que la roue 26 peut être entraînée dans un sens ou dans l'autre pour écarter ou rapprocher la paroi 3 mobile de la paroi 2 fixe.

Pour assurer l'avancement des bouteilles en lignes dans les couloirs 1, l'installation comporte une sole 31 (figure 1), réalisée en matériau thermoplastique, qui présente des ouvertures 34 traversantes pour livrer passage aux pattes 7 et 21 assurant respectivement la fixation des parois 2 et 3 des couloirs 1.

Dans la sole 31, sont aménagées des rainures 32 courbes (figure 1), chacune étant apte à guider un tapis de convoyage (non représenté).

Le tapis de convoyage est un tapis du type sans fin, et n'a pas été représenté sur les figures pour en simplifier la lecture.

On comprend de la description qui précède comment l'invention permet d'atteindre les objectifs qu'elle s'était fixés, notamment celui de prévoir des moyens pour régler la largeur des couloirs en fonction des dimensions de la bouteille (voir figure 6 en particulier).

Il devra toutefois être entendu que l'invention n'est pas limitée au mode de réalisation spécifiquement décrit ci-dessus, et qu'elle s'étend à la réalisation de tout moyen équivalent, dans la limite des revendications annexées.

## Revendications

1. Installation de convoyage comprenant au moins un couloir (1) courbe dans lequel circule une file de produits (B) déplacés par un tapis mobile sans fin, ledit couloir (1) étant délimité :
- par une première paroi (2) fixe solidaire du bâti (4) et qui présente un premier rayon de courbure fixe, et
- par une seconde paroi (3) mobile par rapport audit bâti (4), et qui présente un second rayon de courbure variable selon les produits (B), ladite seconde paroi mobile étant constituée :
- d'un profil (12) de guidage, pouvant comporter plusieurs éléments, faisant office de surface de frottement, qui s'étend de l'entrée jusqu'à la sortie dudit couloir courbe, en vis-à-vis de ladite première paroi (2) fixe,
- d'une structure (10) qui porte ledit profil (12) de guidage, laquelle structure (10) est constituée de plusieurs tronçons (11) solidaires de moyens de déplacement, lesquels tronçons (11) sont répartis entre l'entrée (E) et la sortie (S) dudit couloir (1) courbe et ils sont aboutés et logés glissant dans ledit profil (12) de guidage, lequel profil (12) forme une charnière entre les tronçons (11) de la structure (10).

2. Installation selon la revendication 1, **caractérisée en ce que** les tronçons (11) longs sont fixés sur les moyens de déplacement au niveau d'une de leurs extrémités.

3. Installation de convoyage selon la revendication 1 ou 2, **caractérisée en ce que** ledit profil (12) de guidage est constitué d'un seul élément continu entre l'entrée et la sortie du couloir courbe, solidaire du tronçon (11) central de la structure (10).

4. Installation de convoyage selon la revendication 1 ou 2, **caractérisée en ce que** ledit profil (12) de guidage est constitué de plusieurs éléments fixés sur lesdits tronçons (11) de la structure (10).

5. Installation selon la revendication 4, **caractérisée en ce que** chacun des tronçons (11) de la structure (10) est logé partiellement dans deux éléments du profil (12) de guidage qui sont adjacents pour en assurer la continuité.

6. Installation de convoyage selon l'une quelconque des revendications précédentes, **caractérisée en ce que** ledit second rayon de courbure est inférieur audit premier rayon de courbure.

7. Installation selon l'une quelconque des revendications précédentes, **caractérisée en ce que** ladite paroi (3) mobile s'inscrit suivant un arc de cercle dont le rayon varie entre un rayon maximum et un rayon minimum, et **en ce que** les tronçons (11) sont constitués de plaques métalliques cintrées qui s'inscrivent suivant un arc de cercle présentant un rayon moyen, ledit rayon moyen étant compris entre ledit rayon maximum et ledit rayon minimum.

8. Installation de convoyage selon l'une quelconque des revendications 1 à 7, **caractérisée en ce que** les moyens de déplacement des tronçons (11) sont aptes à réaliser leur déplacement suivant une direction radiale transversale.

9. Installation de convoyage selon la revendication 8, **caractérisée en ce que** les moyens de déplacement des tronçons (11) de la seconde paroi (3) mobile sont constitués de supports (17) rayonnants en forme de barreaux à section en U, disposés radialement, chaque support (17) rayonnant comprenant au moins une patte (21) sur laquelle est fixé un tronçon (11), lequel support (17) rayonnant à section en U est guidé par rapport au bâti (4) par un système de glissières et actionné par un mécanisme (22) de manoeuvre.

10. Installation selon la revendication 9, **caractérisée en ce que** le mécanisme (22) de manoeuvre du support (17) rayonnant à section en U comporte :
- un premier mécanisme de déplacement dudit support (17) rayonnant à section en U comprenant :
- un écrou (23) du type flottant solidaire dudit support (17) rayonnant à section en U, et
- une vis (24) sans fin disposée radialement, guidée dans un palier (33) solidaire du bâti, et
- des moyens (25) d'entraînement en rotation de ladite vis (24) radiale.

11. Installation selon la revendication 10, **caractérisée en ce que** lesdits moyens (25) d'entraînement en rotation de la vis (24) radiale comprennent une roue (26) dentée entraînée par un arbre (30) souple fileté qui s'étend dans une gaine (27) sur le côté du couloir externe fixe de roue (26) en roue (26), au fil des supports (17) rayonnants à section en U à actionner.

12. Installation selon la revendication 9, **caractérisée en ce qu'**elle comporte une sole (31) réalisée en matériau thermoplastique aménagée avec au moins une rainure (32) courbe pour guider le tapis de convoyage correspondant, laquelle sole (31) présente des ouvertures (34) pour le passage des pattes (7, 21) de fixation des parois (2, 3) fixes et mobiles, respectivement.

13. Installation selon la revendication 1, **caractérisée en ce que** le profil (12) de guidage de la paroi (3) mobile présente des extrémités (13) biseautées, en correspondance avec les profils de guidage adjacents, assurant une continuité pour le guidage des produits, quelles que soient leurs dimensions.

14. Installation de convoyage selon la revendication 1, **caractérisée en ce que** la structure (10) porteuse du profil (12) de guidage comprend des tronçons (11) dont le nombre est en rapport avec la longueur du couloir (1) correspondant.

15. Installation selon la revendication 14, **caractérisée en ce que** la structure (10) porteuse du profil (2) de guidage comporte un tronçon (11) central court disposé au voisinage du centre du couloir (1) courbe ainsi que, sur la partie (15) du convoyeur présentant le plus petit rayon de courbure, deux tronçons (11) répartis de part et d'autre dudit tronçon (11) central court, lesdits tronçons (11) étant logés dans ledit profil (12) de guidage.

## Claims

1. Conveying system comprising at least one curved corridor (1) in which a queue of products (B) is conveyed by a continuous conveyor belt, said corridor (1) being delimited by:
- a first fixed wall (2) which is integrally attached to the frame (4) and has a first fixed radius of curvature, and
- a second wall (3) which is mobile relative to said frame (4) and has a second radius of curvature which varies according to the products (B), said second mobile wall consisting of:
- a guide (12), which may comprise multiple elements, used as a friction surface and extending from the entrance to the exit of said curved corridor, facing said first fixed wall (2),
- a structure (10) which supports said guide (12), said structure (10) consisting of several sections (11) integrally attached to movement means, said sections (11) being distributed between the entrance (E) and the exit (S) of said curved corridor (1) and being in abutment and slidably seated in said guide (12), said guide (12) forming a bridge between the sections (11) of the structure (10).

2. System according to claim 1, **characterized in that** the long sections (11) are attached to the movement means at one of their ends.

3. Conveying system according to claim 1 or 2, **characterized in that** said guide (12) consists of a single continuous element between the entrance and the exit of the curved corridor, integrally attached to the central section (11) of the structure (10).

4. Conveying system according to claim 1 or 2, **characterized in that** said guide (12) consists of multiple elements fixed to said sections (11) of the structure (10).

5. System according to claim 4, **characterized in that** each of the sections (11) of the structure (10) is partially seated within two adjacent elements of the guide (12) to ensure continuity.

6. Conveying system according to any one of the above claims, **characterized in that** said second radius of curvature is less than said first radius of curvature.

7. System according to any one of the above claims, **characterized in that** said mobile wall (3) defines an arc of a circle having a radius varying between a maximum radius and a minimum radius, and **in that** the sections (11) consist of curved metal plates defining an arc of a circle having an average radius between said maximum radius and said minimum radius.

8. Conveying system according to any one of claims 1 to 7, **characterized in that** the means which move the sections (11) are able to move them in a transverse radial direction.

9. Conveying system according to claim 8, **characterized in that** the means which move the sections (11) of the mobile second wall (3) consist of radial supports (17) in the form of radially arranged U-section bars, each radial support (17) comprising at least one bracket (21) onto which a section (11) is attached, said U-section radial support (17) being guided relative to the frame (4) by a system of slide rails and being actuated by an actuating mechanism (22).

10. System according to claim 9, **characterized in that** the actuating mechanism (22) of the U-section radial support (17) comprises:
- a first mechanism for moving said U-section radial support (17), comprising:
- a floating nut (23) integrally attached to said U-section radial support (17), and
- a radially arranged endless screw (24), guided in a guide sleeve (33) integrally attached to the frame, and
- a rotational driving means (25) for driving said radial endless screw (24).

11. System according to claim 10, **characterized in that** said rotational driving means (25) for driving the radial screw (24) comprises a toothed wheel (26) driven by a threaded flexible shaft (30) which runs inside a sheath (27) along the side of the fixed exterior corridor, from toothed wheel (26) to toothed wheel (26), between the U-section radial supports (17) to be actuated.

12. System according to claim 9, **characterized in that** it comprises a bed (31) made of thermoplastic material having at least one curved groove (32) to guide the corresponding conveyor belt, said bed (31) having openings (34) to accommodate the passage of brackets (7, 21) for attaching the respective fixed and mobile walls (2, 3).

13. System according to claim 1, **characterized in that** the guide (12) for the mobile wall (3) has beveled ends (13) which correspond to the adjacent guides, to ensure continuity in guiding the products regardless of their size.

14. Conveying system according to claim 1, **characterized in that** the structure (10) supporting the guide (12) comprises sections (11), and the number of sections is related to the length of the corresponding corridor (1).

15. System according to claim 14, **characterized in that** the structure (10) supporting said guide (12) has a short central section (11) at or near the center of the curved corridor (1), and, on the part (15) of the conveyor having the smallest radius of curvature, has two sections (11) arranged on each side of said short central section (11), said sections (11) being seated in said guide (12).

## Patentansprüche

1. Förderanlage mit mindestens einem gekrümmten Gang (1), in dem eine Reihe von Produkten (B) zirkuliert, die von einem beweglichen Endlosband bewegt werden, wobei der besagte Gang (1) folgendermaßen begrenzt wird:
- durch eine gestell(4)feste erste Wand (2), die einen ersten Krümmungsradius aufweist, und
- durch eine zweite bezüglich dem besagten Gestell (4) bewegliche Wand (3), die einen zweiten Krümmungsradius aufweist, der je nach den Produkten (B) veränderbar ist, wobei die besagte bewegliche zweite Wand aus Folgendem besteht:
- einem Führungsprofil (12), das mehrere Elemente aufweisen kann und als Reibungsfläche fungiert, die sich gegenüber der besagten ersten festen Wand (2) vom Eingang bis zum Ausgang des besagten gekrümmten Ganges erstreckt,
- einer Struktur (10), die das besagte Führungsprofil (12) trägt, wobei die Struktur (10) aus mehreren Teilabschnitten (11) besteht, die einstückig mit Mitteln zur Fortbewegung verbunden sind, wobei die Teilabschnitte (11) zwischen dem Eingang (E) und dem Ausgang (S) des besagten gekrümmten Ganges (1) verteilt sind und derart aneinander gefügt und aufgenommen sind, dass sie im besagten Führungsprofil (12) gleiten, wobei das Profil (12) ein Gelenk zwischen den Teilabschnitten (11) der Struktur (10) ausbildet.

2. Anlage nach Anspruch 1, **dadurch gekennzeichnet, dass** die langen Teilabschnitte (11) auf den Mitteln zur Fortbewegung an einem ihrer Enden befestigt sind.

3. Förderanlage nach Anspruch 1 oder 2, **dadurch gekennzeichnet, dass** das besagte Führungsprofil (12) aus einem einzigen durchgehenden Element zwischen dem Eingang und dem Ausgang des gekrümmten Ganges besteht, das einstückig mit dem mittleren Teilabschnitt (11) der Struktur (10) verbunden ist.

4. Förderanlage nach Anspruch 1 oder 2, **dadurch gekennzeichnet, dass** das besagte Führungsprofil (12) aus mehreren Elementen besteht, die auf den besagten Teilabschnitten (11) der Struktur (10) befestigt sind.

5. Anlage nach Anspruch 4, **dadurch gekennzeichnet, dass** jeder der Teilabschnitte (11) der Struktur (10) teilweise in zwei Elementen des Führungsprofils (12) aufgenommen ist, die benachbart sind, um die Kontinuität davon zu gewährleisten.

6. Förderanlage nach einem der vorhergehenden Ansprüche, **dadurch gekennzeichnet, dass** der besagte zweite Krümmungsradius kleiner als der besagte erste Krümmungsradius ist.

7. Anlage nach einem der vorhergehenden Ansprüche, **dadurch gekennzeichnet, dass** die besagte bewegliche Wand (3) gemäß einem Kreisbogen verläuft, dessen Radius zwischen einem maximalen Radius und einem minimalen Radius variiert, und dadurch, dass die Teilabschnitte (11) aus gebogenen Metallplatten bestehen, die gemäß einem Kreisbogen verlaufen, der einen mittleren Radius aufweist, wobei der besagte mittlere Radius zwischen dem besagten maximalen Radius und dem besagten minimalen Radius liegt.

8. Förderanlage nach einem der Ansprüche 1 bis 7, **dadurch gekennzeichnet, dass** die Mittel zur Fortbewegung der Teilabschnitte (11) ausgebildet sind, ihre Fortbewegung gemäß einer radialen Querrichtung zu realisieren.

9. Förderanlage nach Anspruch 8, **dadurch gekennzeichnet, dass** die Mittel zur Fortbewegung der Teilabschnitte (11) der beweglichen zweiten Wand (3) aus Strahlenträgern (17) in Form von im Querschnitt U-förmigen Stäben bestehen, die radial angeordnet sind, wobei jeder Strahlenträger (17) zumindest eine Lasche (21) aufweist, auf der ein Teilabschnitt (11) befestigt ist, wobei der im Querschnitt U-formige Strahlenträger (17) bezüglich dem Gestell (4) von einem Schienensystem geführt wird und von einem Betätigungsmechanismus (22) betätigt wird.

10. Anlage nach Anspruch 9, **dadurch gekennzeichnet, dass** der Betätigungsmechanismus (22) des im Querschnitt U-förmigen Strahlenträgers (17) Folgendes aufweist:
- einen ersten Fortbewegungsmechanismus des besagten im Querschnitt U-förmigen Strahlenträgers (17), der Folgendes aufweist:
- eine Mutter (23) vom schwimmenden Typ, die mit dem besagten im Querschnitt U-förmigen Strahlenträger (17) einstückig verbunden ist, und
- einen Schneckenantrieb (24), der radial angeordnet ist und in einem gestellfesten Lager (33) geführt wird, und
- Drehantriebsmittel (25) der besagten radialen Schraube (24).

11. Anlage nach Anspruch 10, **dadurch gekennzeichnet, dass** die besagten Drehantriebsmittel (25) der radialen Schraube (24) ein Zahnrad (26) aufweisen, das von einer biegsamen Gewindewelle (30) angetrieben wird, die sich in einer Hülle (27) auf der Seite des äußeren festen Ganges von Rad (26) zu Rad (26) gemäß dem Verlauf der zu betätigenden im Querschnitt U-föriigen Strahlenträger (17) erstreckt.

12. Anlage nach Anspruch 9, **dadurch gekennzeichnet, dass** die Anlage einen Boden (31) aus thermoplastischem Material aufweist, der mit zumindest einer gebogenen Nut (32) zum Führen des entsprechenden Förderbandes ausgestattet ist, wobei der Boden (31) Öffnungen (34) zum Durchlassen der Laschen (7, 21) zur Befestigung jeweils der festen und beweglichen Wände (2, 3) aufweist.

13. Anlage nach Anspruch 1, **dadurch gekennzeichnet, dass** das Führungsprofil (12) der beweglichen Wand (3) abgeschrägte Enden (13) entsprechend den benachbarten Führungsprofilen aufweist, so dass eine Kontinuität für die Führung der Produkte unabhängig von ihren Maßen gewährleistet ist.

14. Förderanlage nach Anspruch 1, **dadurch gekennzeichnet, dass** die Tragstruktur (10) des Führungsprofils (12) Teilabschnitte (11) aufweist, deren Zahl im Verhältnis zur Länge des entsprechenden Ganges (1) steht.

15. Anlage nach Anspruch 14, **dadurch gekennzeichnet, dass** die Tragstruktur (10) des Führungsprofils (12) einen kurzen mittleren Teilabschnitt (11) aufweist, der benachbart zur Mitte des gekrümmten Ganges (1) angeordnet ist, sowie zwei Teilabschnitte (11) auf dem Teil (15) der Förderanlage, der den kleinsten Krümmungsradius aufweist, die auf beiden Seiten des besagten kurzen mittleren Teilabschnitts (11) verteilt sind, wobei die besagten Teilabschnitte (11) im besagten Führungsprofil (12) aufgenommen sind.
